# EUROPÄISCHE PATENTANMELDUNG

(11) **EP 0 888 941 A1**
(43) Veröffentlichungstag der Anmeldung: **07.01.1999**
(21) Anmeldenummer: 98111394.7
(22) Anmeldetag: 20.06.1998
(51) Int. Cl.: B60S 1/04, B60S 1/56

(54) **Seitenscheiben-Reinigung**

(30) Priorität: 04.07.1997 DE 19728563
(71) Anmelder: Mannesmann VDO Aktiengesellschaft, 60388 Frankfurt am Main (DE)
(72) Erfinder: Petzold, Sven, 65191 Wiesbaden (DE)
(74) Vertreter: Klein, Thomas, Dipl.-Ing.

(57) **Zusammenfassung**

Die Erfindung betrifft eine Scheibe (3) eines Fahrzeuges, insbesondere eines Personenkraftwagens, die zwischen einer Offen- und einer Schließstellung und gegebenenfalls in eine Zwischenstellung bewegbar ist, wobei die Scheibe (3) insbesondere in einer Tür (1) angeordnet ist, wobei erfindungsgemäß vorgesehen ist, daß während der Bewegung der Scheibe (3) von einer in die andere Stellung zumindest ein Reinigungsvorgang ausführbar ist.

## Beschreibung

Die Erfindung betrifft eine Scheibe eines Fahrzeuges, insbesondere eines Personenkraftwagens, gemäß den Merkmalen des Oberbegriffs des Patentanspruches 1.

Es sind allgemein Scheiben bekannt, die insbesondere in einer Tür des Fahrzeuges angeordnet sind, wobei es sich weiterhin um Seitenscheiben handeln kann. Die Scheiben sind aufgrund einer manuellen Betätigung oder mittels eines Stellantriebes zwischen einer Offen- und einer Schließstellung und gegebenenfalls in eine Zwischenstellung bewegbar. Unter Sicherheitsaspekten ist es von Nachteil, daß insbesondere die Sicht von innen nach außen beeinträchtigt oder gegebenenfalls gar nicht mehr möglich ist, wenn die Scheibe entweder von innen und/oder von außen verschmutzt, beschlagen oder sogar vereist ist. Dadurch kommt es zu Beeinträchtigungen beim Betrieb des Fahrzeuges, wobei aus den Beeinträchtigungen Gefahrensituationen erwachsen können.

Der Erfindung liegt daher die Aufgabe zugrunde, die Sicherheit und auch den Komfort beim Betrieb des Fahrzeuges zu erhöhen.

Diese Aufgabe ist durch die Merkmale des Patentanspruches 1 gelöst.

Erfindungsgemäß ist vorgesehen, daß während der Bewegung der Scheibe von einer in die andere Stellung zumindest ein Reinigungsvorgang ausführbar ist. Dieser Reinigungsvorgang kann während der Bewegung von der Offen- in die Schließstellung und/oder umgekehrt ausgeführt werden. Von Vorteil ist, daß der Reinigungsvorgang während einer vollständigen Bewegung der Scheibe ausgeführt wird, so daß auch die gesamte Fläche der Scheibe gereinigt wird. Weiterhin kann die Reinigung stattfinden bei einer Bewegung von einer Zwischenstellung in die Offen- oder die Schließstellung; denkbar ist aber auch, den Reinigungsvorgang während dieser Bewegung nicht auszuführen. Der erfindungsgemäße Reinigungsvorgang hat den Vorteil, daß die Scheibe zumindest von außen, insbesondere aber auch von innen und von außen, gereinigt wird, so daß die Sicht durch die Scheibe deutlich verbessert wird und damit Gefahrensituationen, die aus verschmutzten, beschlagenen und/oder vereisten Scheiben resultieren, ausgeschlossen sind. Darüber hinaus erhöht sich der Komfort für die Insassen des Fahrzeuges, da insbesondere beschlagene Scheiben nicht mehr mit Tüchern, Schwämmen oder dergleichen gereinigt werden müssen, sondern eine Betätigung des bei heutigen Fahrzeugen in der Regel vorhandenen Fensterhebers ausreicht, um die Scheibe zumindest von innen zu bereinigen. Hierbei versteht es sich von selbst, daß zur Reinigung der Scheibe diese von einer Schließstellung in die Offenstellung und danach wieder in die Schließstellung gebracht wird. Dieser Vorgang ist - wie schon ausgeführt - durch zweimaliges oder mehrmaliges Betätigen des Fensterhebers ausführbar, wobei auch eine Steuerung des Fensterhebers derart erfolgen kann, daß dieser Reinigungsvorgang automatisch ausführbar ist. Auch der Komfort ist dadurch verbessert, daß ein Entfernen von Regenwasser auf der Außenseite, insbesondere wenn es noch regnet, von innen durchgeführt werden kann und nicht mehr von außen gewischt werden muß. Ein weiterer Vorteil ist darin zu sehen, daß eine ansich mögliche oder erforderliche Bewegung der Scheibe für den Reinigungsvorgang ausgenutzt wird, so daß zusätzliche Stellantriebe für den Reinigungsvorgang entfallen.

In Weiterbildung der Erfindung ist während der Bewegung der Scheibe von einer in die andere Stellung ein Wischer an die Scheibe anlegbar. Ein solcher Wischer, der dem Wischerblatt zur Reinigung der Windschutzscheibe des Fahrzeuges ähnelt oder gleich ist, hat den Vorteil, daß damit zuverlässig Feuchtigkeit von außen, die beispielsweise durch Regen hervorgerufen worden ist, und auch Feuchtigkeit von innen zuverlässig beseitigt werden kann. Darüber hinaus hat ein solcher Wischer den Vorteil, daß er im Falle von Verschleiß auswechselbar ist.

In Weiterbildung der Erfindung ist der Wischer auf einem Träger, insbesondere einem verschwenkbaren Träger, angeordnet, wobei der Träger den Wischer in eine Betriebsposition oder eine Ruheposition bewegt. Dies hat den Vorteil, daß der Wischer nur dann an der Scheibe anliegt, wenn auch ein Reinigungsvorgang ausgeführt werden soll. Ist ein Reinigungsvorgang nicht erforderlich, verbleibt der Wischer in seiner Ruheposition.

In Weiterbildung der Erfindung ist der Träger von einem Stellantrieb, insbesondere einem Elektromotor, bewegbar. Dadurch ist die Bewegung des Trägers von der Betriebsposition des Wischers in seine Ruheposition automatisierbar. Weiterhin ist es möglich, daß ein Insasse des Fahrzeuges den Stellantrieb zur Bewegung des Wischers in seine Betriebsposition nur dann aktiviert, wenn auch ein Reinigungsvorgang gewünscht ist. Ansonsten kann der Wischer in seiner Ruheposition verbleiben. Damit ist in vorteilhafter Weise sichergestellt, daß der Wischer nicht bei jeder Betätigung der Scheibe (insbesondere mittels des Fensterhebers) einen Reinigungsvorgang ausführt, da dies insbesondere bei trockenen Scheiben, auf denen sich Staubpartikel und dergleichen befinden, zu einem erhöhten Verschleiß würde.

In Weiterbildung der Erfindung sind Mittel zur Stellungserfassung der Scheibe und zur Ansteuerung des Stellantriebes vorgesehen. Unabhängig und zusätzlich zu dem Vorhandensein einer Steuerung, die bewirkt, daß der Wischer in Abhängigkeit von der Feuchtigkeit in seine Betriebsposition gebracht wird oder bei Trockenheit der Scheibe in seiner Ruheposition verbleibt, ist es durch die Mittel zur Stellungserfassung der Scheibe von Vorteil, daß der Stellantrieb in der Offen- und/oder Schließstellung in dem Sinne angesteuert wird, daß in diesen beiden genannten Stellungen in seine Ruheposition gebracht wird. Dadurch wird ein Verschleiß in der Ruheposition durch ein erhöhtes Andrücken des Wischers an die Scheibe vermieden.

In Weiterbildung der Erfindung sind Mittel zur Zufuhr von Reinigungsmitteln vorgesehen. Damit kann in wirksamer Weise der Reinigungsvorgang unterstützt werden.

In einer weiteren Ausgestaltung der Erfindung ist der Stellantrieb Bestandteil einer Zentralverriegelungsanlage des Fahrzeuges. Somit kann in vorteilhafter Weise ein einziger Stellantrieb verwendet werden, um einerseits die Zentralverriegelungsanlage zu steuern und andererseits, gegebenenfalls unter Zuhilfenahme einer Bewegungsumkehr oder Bewegungsumsetzung, der Wischer in die Betriebsposition oder in die Ruheposition bewegbar ist.

Weitere Ausgestaltungen der Erfindung sind in den Unteransprüchen angegeben, aus denen sich vorteilhafte Wirkungen erzielen lassen. Zwei Ausgestaltungen der Erfindung, die ebenfalls in den Unteransprüchen angegeben sind und auf die die Erfindung nicht beschränkt ist, sind im folgenden beschrieben und anhand der Figuren erläutert.

Es zeigen:
- Figur 1: eine Scheibe mit einem von einem Stellantrieb bewegbaren Wischer in der Schließstellung,
- Figur 2: einen Bewegungsvorgang der Scheibe gemäß Figur 1,
- Figur 3: eine Scheibe mit einem von einem Nocken gesteuert bewegbaren Wischer in der Schließstellung,
- Figur 4: einen Bewegungsvorgang der Scheibe gemäß Figur 3.

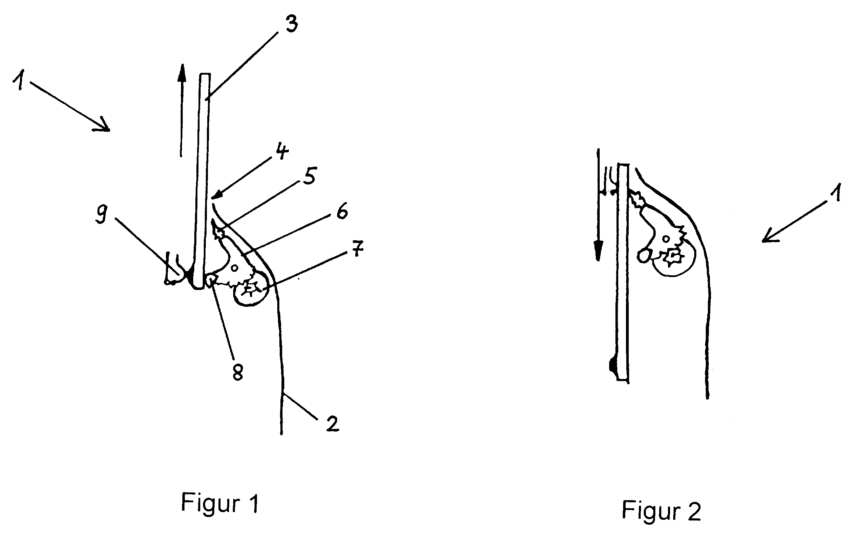

Figur 1 zeigt eine Scheibe mit einem von einem Stellantrieb bewegbaren Wischer in der Offenstellung. Eine Tür 1 eines Fahrzeuges, die nur teilweise im Schnitt dargestellt ist, weist in der Regel ein Türblech 2 auf. Türblech 2 und die nicht gezeigte Innenverkleidung der Tür 1 bilden einen Türkorpus, in dem in ansich bekannter Weise Zentralverriegelungsanlage, Fensterheber, Audiokomponenten und gegebenenfalls weitere Komponenten angeordnet sind. In der Tür 1 ist weiterhin eine Scheibe 3 angeordnet, die sich in Figur 1 in ihrer Offenstellung befindet und die in den Türkorpus versenkbar in die Offenstellung bringbar ist. Dies kann manuell oder mittels Fensterheber geschehen. Zwischen dem oberen Ende des Türbleches und der Scheibe 3 kann eine Dichtung 4 vorgesehen sein, die verhindert, daß Wasser und Verunreinigungen in den Türkorpus eindringen. Eine solche Dichtung 4 hat nur Dichtungsfunktion und keinerlei Reinigungswirkung, da sie dazu nicht ausgebildet ist. Erfindungsgemäß ist nun vorgesehen, daß innerhalb des Türbleches 2 ein Wischer 5 für einen Reinigungsvorgang der Scheibe 3 angeordnet ist. Bei der in Figur 1 gezeigten Ausgestaltung sitzt der Wischer 5 auf einem Träger 6, wobei der Träger 6 um einen Drehpunkt herum verschwenkbar ist. Der Wischer 5 erstreckt sich zumindest teilweise, in vorteilhafter Weise über die gesamte Breite der Scheibe 3, wozu der Träger 6 insbesondere als Längsträger in entsprechender Weise ausgebildet ist. Mit der Bezugsziffer 7 ist ein Elektromotor bezeichnet, der als Stellantrieb für die Verschwenkung des Träger 6 fungiert. Auf der Antriebswelle des Elektromotors ist ein Ritzel angeordnet, das auf ein Zahnradsegment, das Bestandteil des Trägers 6 ist oder an diesem befestigt ist, kämmt und den Träger 6 und damit den Wischer 5 von seiner Betriebsposition in seine Ruheposition und umgekehrt bringt. Bei Betrachtung der Figur 1 ist erkennbar, daß unterhalb des Wischers 5 eine Dichtschiene 8 angeordnet ist, die bei der Ruheposition des Wischers 5 an der Scheibe anliegt und bei der an der Scheibe 3 anliegendem Wischer 5 von der Scheibe 3 abhebt. Damit ergänzt oder übernimmt die Dichtschiene 8 die Funktion der Dichtung 4. Als Mittel zur Stellungserfassung der Scheibe 3 ist ein Kontakt 9 vorgesehen, der von einem am unteren Bereich der Scheibe 3 nicht näher bezeichneten Nocken betätigt wird.

Soll - wie in Figur 1 gezeigt, eine Bewegung der Scheibe 3 von ihrer Offenstellung in die Schließstellung erfolgen, wird der Fensterheber betätigt. Nach dem sich die Scheibe 3 ein Stück nach unten bewegt hat, wird der Kontakt 9 geöffnet (denkbar auch geschlossen), wobei in Abhängigkeit der Betätigung des Kontaktes 9 der Elektromotor 7 angesteuert wird und den Wischer 5 an die Scheibe 3 zur Reinigung anlegt.

Figur 2 zeigt die Scheibe 3 während des Bewegungsvorganges, hier dargestellt der Bewegungsvorgang von der Offen- in die Schließstellung. Nicht gezeigt ist die Offenstellung der Scheibe 3, bei der jedoch der Stellantrieb 7 einschließlich des Wischers 5 des Trägers 6 und der Dichtschiene 8 die gleiche Position einnimmt, wie in Figur 1 gezeigt.

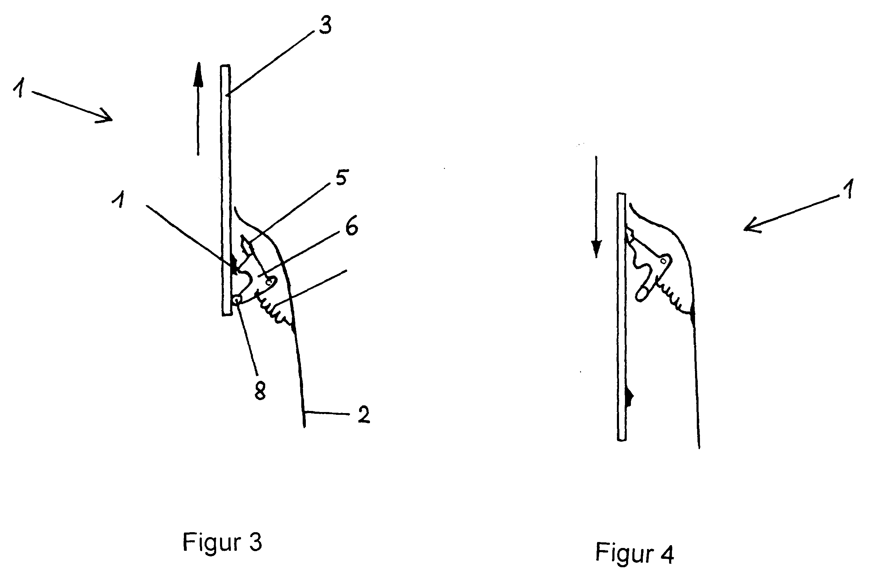

In Figur 3 ist die Scheibe 3 gezeigt, mit einem von einem Nocken gesteuert bewegbaren Wischer in der Schließstellung. Anstelle des steuerbaren Stellantriebes ist in Figur gezeigt, daß der Träger 6 mittels einer Feder 10 federkraftbeaufschlagt ist, wobei die Feder 10 bewirkt, daß der Träger 6 um seinen Drehpunkt herum in Richtung der Scheibe 3 angedrückt wird. Während der Bewegung von der Offen- in die Schließstellung oder umgekehrt (oder von einer Zwischenstellung in die genannten Stellungen) wird der Wischer 5 mittels der Kraft der Feder 10 an die Scheibe 3 gedrückt. In einer Endstellung der Scheibe 3, wie dies in Figur 3 dargestellt ist, wirkt eine Ausbuchtung des Trägers 6 mit einem Nocken 11, der an der Scheibe 3 angeordnet ist, wobei der Nocken 11 bewirkt, daß der Träger 6 den Wischer 5 von seiner Betriebsposition in seine Ruheposition bewegt. Anstelle des Nockens 11 ist es auch denkbar, daß die Scheibe 3 in einer ihrer Endstellungen einen Hebel oder dergleichen betätigt, der den Träger 6 in die in Figur 3 gezeigte Position bringt.

Figur 4 zeigt noch die Position des Träger 6 während der Bewegung der Scheibe 3 von einer in die andere Stellung, bei der erkennbar ist, daß der Wischer 5 an der Scheibe 3 anliegt und die Dichtschiene 8 abgehoben ist.

Es sei noch erwähnt, daß die erfindungsgemäße Ausgestaltung auch als Modul ausgestaltet sein kann, das insbesondere die Komponenten Wischer 5, Träger 6, Elektromotor 7 (alternativ Feder 10) und Dichtschiene 8 beinhalten kann. Dies hat montage- und fertigungstechnische Vorteile. Weiterhin ist es denkbar, daß die Tür 1 derart ausgestaltet ist, daß der Wischer 5 zum Auswechseln im Falle von Beschädigung oder Verschleiß zugänglich ist. Weiterhin ist noch denkbar, auf jeder Seite der Scheibe 3 einen solchen Wischer 5 vorzusehen, so daß nicht nur z.B. Regen von außen, sondern auch Feuchtigkeit von innen beseitigt werden kann. Dabei versteht es sich von selbst, den innenliegenden und den außenliegenden Wischer 5 gemeinsam oder getrennt je nach Bedarf zu betätigen. In einer weiteren denkbaren Ausgestaltung ist der Wischer 5 aus einem solchen Material, das es zuläßt, nicht nur Feuchtigkeit, Regen oder dergleichen zu beseitigen, sondern auch eine vereiste Scheibe zu reinigen. Alternativ dazu ist es denkbar, zusätzlich zu dem Wischer 5 beispielsweise bei Unterschreitung einer vorgebbaren Temperatur einen Eiskratzer parallel zu dem Wischer 5 zu schalten, den Wischer 5 zu beheizen oder längs des Wischers 5 eine Heizeinrichtung vorzusehen.

### Bezugszeichenliste

- 1.: Tür
- 2.: Türblech
- 3.: Scheibe
- 4.: Dichtung
- 5.: Wischer
- 6.: Träger
- 7.: Elektromotor
- 8.: Dichtschiene
- 9.: Kontakt
- 10.: Feder
- 11.: Nocken

## Patentansprüche

1. Scheibe (3) eines Fahrzeuges, insbesondere eines Personenkraftwagens, die zwischen einer Offen- und einer Schließstellung und gegebenenfalls in eine Zwischenstellung bewegbar ist, wobei die Scheibe (3) insbesondere in einer Tür (1) angeordnet ist, dadurch gekennzeichnet, daß während der Bewegung der Scheibe (3) von einer in die andere Stellung zumindest ein Reinigungsvorgang ausführbar ist.

2. Scheibe (3) nach Anspruch 1, dadurch gekennzeichnet, daß während der Bewegung der Scheibe (3) von einer in die andere Stellung ein Wischer (5) an die Scheibe (3) anlegbar ist.

3. Scheibe (3) nach Anspruch 2, dadurch gekennzeichnet, daß der Wischer (5) auf einem Träger (6), insbesondere einem verschwenkbaren Träger, angeordnet ist, wobei der Träger (6) den Wischer (5) in eine Betriebsposition oder eine Ruheposition bewegt.

4. Scheibe (3) nach Anspruch 3, dadurch gekennzeichnet, daß der Träger (6) von einem Stellantrieb, insbesondere einem Elektromotor (7), bewegbar ist.

5. Scheibe (3) nach Anspruch 3, dadurch gekennzeichnet, daß an der Scheibe (3) ein Nocken (10) angeordnet ist, wobei der von dem Nocken (10) gesteuerte Träger (6) den Wischer (5) in die Betriebsposition oder die Ruheposition bewegt.

6. Scheibe (3) nach einem der Ansprüche 1 bis 5, dadurch gekennzeichnet, daß Mittel zur Stellungserfassung der Scheibe (3) und zur Ansteuerung des Stellantriebes vorgesehen sind.

7. Scheibe (3) nach einem der Ansprüche 1 bis 6, dadurch gekennzeichnet, daß Mittel zur Zufuhr von Reinigungsmitteln vorgesehen sind.

8. Scheibe (3) nach einem der Ansprüche 1 bis 7, dadurch gekennzeichnet, daß unterhalb des Wischers (5) eine Dichtschiene (8) oder dergleichen vorgesehen ist.

9. Scheibe (3) nach Anspruch 8, dadurch gekennzeichnet, daß die Dichtschiene (8) derart an dem Träger (6) angeordnet ist, daß bei an der Scheibe (3) anliegendem Wischer (5) die Dichtschiene (8) von der Scheibe (3) abgehoben ist und umgekehrt.

10. Scheibe (3) nach einem der vorhergehenden Ansprüche, dadurch gekennzeichnet, daß der Stellantrieb Bestandteil einer Zentralverriegelungsanlage des Fahrzeuges ist.
